# EUROPEAN PATENT APPLICATION

(11) **EP 1 800 940 A2**
(43) Date of publication of application: **27.06.2007**
(21) Application number: 06125089.0
(22) Date of filing: 30.11.2006
(51) Int. Cl.: B60N 2/30, B60N 2/60

(54) **Vehicle seat assembly**

(30) Priority: 21.12.2005 GB 0525963
(71) Applicant: Nissan Motor Manufacturing (UK) Ltd., Cranfield, Bedfordshire MK43 0DB (GB)
(72) Inventor: Noble, Paul, Cranfield, Bedfordshire MK43 0DB (GB)
(74) Representative: Hufton, Victoria Alice

(57) **Abstract**

A vehicle seat assembly (10) comprises a seat cushion (16) and a seat back (18), in which the seat back (18) is pivotally mounted to permit the seat back (18) to be lifted over the seat cushion (16) from a first seating position (A) to a second stowed position (D) in which the seat back (18) remains substantially upright. The seat back (18) may be pivotally mounted on the seat cushion (16) or the vehicle floor (12). In order to protect the seat from damage or soiling when the seat is in the stowed position (D), a load space cover (50) may be attached to the rear of the seat back (18). The cover (50) acts in a conventional manner to hide the load space (40) behind the seat back (18) when the seat back (18) is in a seating position (A), and also provides a barrier between the seat back (18) and/or seat cushion (16) and the extended load space (42) created when in a stowed position (D).

## Description

The present invention relates to a vehicle seat assembly and more particularly to a vehicle seat assembly adapted to be reconfigured to create load space in the vehicle when not required for seating purposes.

Many vehicles nowadays have adaptable seating arrangements whereby one or more seats may be folded or collapsed to create additional load space. Typically, it is the rear seats that can be adapted in this way such that the additional load space created effectively extends the capacity of the boot. Often the rear seats will be split, either in the middle or offset to one side, so that each side can be adapted independently to provide maximum flexibility.

Various collapsing or folding mechanisms have been proposed. Perhaps the most common mechanism involves first lifting the seat cushion from the rear so that it adopts a substantially vertical position resting against the rear of a front seat back and then folding the rear seat back forwards so that it occupies the space vacated by the seat cushion. Other arrangements include double folding seats or seats that fold away into the floor.

It will be appreciated that each of the aforementioned seat mechanisms can be complicated, expensive and/or heavy to operate. There may also be problems associated with accommodating any headrests that extend from the seat backs when the seats are collapsed; for example, depending on the mechanism involved, the headrest may be crushed against the underside of the displaced seat cushion or against the rear of the front seat and this may even prevent the seat back from folding flat.

Accordingly, and from a first aspect, it is an object of the present invention to provide a vehicle seat assembly that may be reconfigured to create storage space, and that eliminates or reduces one or more of the aforementioned problems of the prior art.

From a first aspect, the invention resides in a vehicle seat assembly comprising a seat cushion and a seat back, wherein the seat back is pivotally mounted in the vehicle to permit the seat back to be lifted over the seat cushion from a first seating position to a second stowed position in which the seat back remains substantially upright.

As will be apparent, in the assembly of the invention, it is not necessary first to move the seat cushion before being able to move the seat back to a stowed position in order to create additional load space. Moreover, because the seat back remains substantially upright in the stowed position, the problem of accommodating any head restraint extending from or above the seat back is removed as the seat back is not inverted, but rather translated between the two positions.

In a preferred assembly, the pivotal mounting allows the seat back to be at least partially lowered into the foot well in front of the seat cushion when in a fully stowed position. In this way, the front of the seat cushion is able to prevent the seat back from rotating backwards to any significant extent to assume a more horizontal position and effectively reduce the usefulness of the additional load space created.

However, it may not always be possible to accommodate at least a lower portion of the seat back if, for example, the seat is a rear seat and the gap between the front seat and the rear seat is insufficient. Such a situation may occur, for example, when either or both the front and rear seats are slidably mounted on rails and the front seat is slid back to its maximum extent and/or the rear seat is slid forward, or when the seat back of the front seat is in a reclined position.

If there is insufficient space to lower the seat back into the foot well for whatever reason, the pivotal mounting allows the seat back to be lifted over the seat cushion until it rests in a substantially upright position against the rear of the front seat. In this way, additional load capacity may still be created irrespective of the gap between the front and rear vehicle seats.

The seat back may be pivotally mounted, for example, to the vehicle body, preferably the vehicle floor, or to another part of the seat assembly, preferably the seat cushion.

The pivotal mounting forming part of the seat assembly according to the invention preferably comprises a pivot arm, pivotally connected at a first position either to the seat cushion or to the vehicle floor, and to which the seat back is pivotally connected at a second position.

With a double pivot mounting of this kind, the seat back can pivot about the second position independently of the position of the pivot arm with respect to the seat cushion. As such, the seat back is able to adopt an upright orientation in its stowed position, yet can adopt whatever orientation is convenient or comfortable as it is moved during a stowing operation. More importantly, such a linkage mechanism makes it possible to move the seat back to a stowed position in a controlled manner that avoids collision with the vehicle roof.

Preferably the pivot arm is pivotally connected at the first position to a side edge of the seat cushion at a distance midway between the seating position and the fully stowed position of the seat back. Alternatively, the pivot arm may be pivotally connected at the first position to the vehicle floor, also at a distance midway between the seating and stowed positions. To allow the seat back to lie forward of the seat cushion in a fully stowed position (and hence occupy part of the foot well in front of the cushion), the pivotal connection will usually be fixed just forward of the middle of the cushion's side edge, either on the side edge itself or on an equivalent position on the vehicle floor.

The pivot arm is preferably pivotally connected at the second position to a side edge of the seat back, more preferably at or towards the lower end of the side edge.

In most vehicle seat assemblies, the seat back lies above and often rests upon the rear end of the seat cushion with the result that the first pivot position will inevitably lie in a different horizontal plane to the second pivot position. Accordingly, if the pivot arm comprises a substantially straight elongate member, it may be exposed at least in part above the seat cushion as it approaches the seat back when the latter is in the seating position. Such a pivot arm may create an obstacle for passengers entering or leaving the vehicle and may also be unsightly.

For the above reason, the pivot arm preferably comprises an elongate portion for extending alongside the side edge of the seat cushion, optionally close to the vehicle floor, from a position adjacent the first pivotal connection to a position adjacent the rear end of the seat cushion and an angled portion for extending generally upwards from the end position to a position adjacent the second pivotal connection. The angled portion preferably extends at an angle of 90° or greater with respect to the elongate portion.

A further benefit achieved through the use of an angled pivot arm as described above is that when the seat back is moved from the seating position to the stowed position, the pivot arm rotates about the first position so that angled portion extending above the elongate portion in the seating position is able to extend downwards into the foot well in front of the seat cushion in the stowed position. This of course assumes that there is sufficient space in front of the seat cushion to permit rotation of the pivot arm through 180° or thereabouts.

Ideally the elongate portion of the angled pivot arm lies substantially horizontal when the seat back is in both the seating position and the extreme, stowed position. Means for preventing rotation of the pivot arm beyond the horizontal position, at least with regard to its position in the fully stowed mode, may be provided. In the seating mode, rotation of the pivot arm beyond the horizontal position will generally be prevented as the base of the seat back comes into contact with the rear upper surface of the seat cushion.

For safety reasons, a locking mechanism is preferably provided to secure the seat back in the seating position. Such a seat back locking mechanism may, for example, comprise a striker and latch locking mechanism, with a latch provided on the seat back and a striker provided at the appropriate position on the vehicle body or vice versa. In order to release the seat back to allow forward movement to a stowing position it is necessary for a user to disengage the mechanism. However, when being moved from a stowed position, the striker will automatically engage with the latch as the seat back reaches the seating position. In other words, the user need take no positive action to achieve a locked seating position.

Alternatively, or in addition thereto, there may be provided a locking mechanism operable to prevent movement of the pivot arm when the seat back is in the seating position. Such a pivot arm locking mechanism also has the effect of securing the seat back in the seating position. As with the aforementioned seat back locking mechanism, a pivot arm locking mechanism may similarly comprise a striker and latch locking mechanism, with a latch provided on the pivot arm and a striker provided at the appropriate position on either the vehicle body or the seat cushion, or vice versa.

A locking mechanism may additionally be employed to retain the seat back upright in a stowed position. Of course, where there is sufficient space for the seat back to be at least partially "wedged" into the foot well, it may not be necessary to employ a locking mechanism. However, where there is insufficient space as described above, a locking mechanism may be useful to prevent the seat back from falling backwards on to the seat cushion. The locking mechanism for securing the seat back upright in a stowed position may be complementary to that used to secure the seat back upright in the seating position. For example, the latch on the seat back may engage with either one of a pair of strikers, depending on whether the seat back is in the seating or stowed position. Alternatively, where the seat assembly comprises a rear seat, the front seat and rear seats may be provided with complementary engagement means for retaining the rear seat back against the rear of the front seat back.

The Applicant has further appreciated that the double pivot mechanism also creates an opportunity for the seat back to be angled even when in a seating position. Hence the pivotal connection between the seat back and the pivot arm at the second position advantageously comprises a recline mechanism further to allow the seat back to be reclined to a desired angle in a seating position and/or to be folded forward towards the seat cushion.

The recline mechanism may be a conventional one, such as one comprising a locking member adapted to enable and disable pivotal movement by disengaging and engaging respectively with a co-operating locking member for holding the seat back at a desired angular position.

A toothed arrangement allowing incremental adjustment of the seat recline angle is preferred. For example, the recline mechanism may include a toothed locking member pivotally mounted on the seat back for engagement with a toothed plate integral with or attached to the pivot arm at the second pivot position. Disengagement of the locking member from the plate releases the seat back to allow it to pivot freely about the second pivot position and in turn to enable pivoting of the pivot arm about the first pivot position for moving the seat back to a stowed position.

Of course, while the invention according to the first aspect provides a useful means of collapsing a vehicle seat to create additional load space without the need to move the seat cushion, it does result in the seat cushion being exposed in the expanded load space. As such, the seat cushion is at risk of being soiled or damaged when dirty and/or heavy loads, for example, are loaded into the additional load space created. It is therefore a further object of the invention to provide protective means for shielding the seat cushion against damage.

Accordingly, and from a second aspect, the invention resides in a load space cover arrangement for a vehicle, the vehicle having at least one seat assembly comprising a seat cushion and a seat back adapted for movement between a seating position and a stowed position, characterised in that the load space cover is mounted on the rear of the seat back for hiding a load space behind the seat back when the seat back is in a seating position and for providing a barrier between the seat back and/or seat cushion and an extension of the load space created when the seat back is in a stowed position.

It will be understood that the cover forming part of the arrangement according to the second aspect may act as a tonneau cover or parcel shelf when the seat back is in a seating position. In this regard, the cover is preferably mounted on the seat back at or close to its upper edge. In this way, not only does the cover hide the same or similar volume of load space as would a tonneau cover or parcel shelf conventionally mounted on the vehicle body, but it also acts to protect virtually the full length of the seat back when in the stowed position.

It will be appreciated that the second aspect of the invention is particularly useful when employed with the seating assembly according to the first aspect of the invention. In such a case, the cover will protect both the seat back and seat cushion, the cushion being exposed behind the seat back when the latter is moved to a stowed position. However, the second aspect of the invention may be equally useful when employed with known seating assemblies where, for example, the seat back is simply folded towards the seat cushion to create additional load space, or when the seat cushion is moved out of the way prior to the seat back being folded forwards to create the additional space.

As mentioned, the cover may comprise a tonneau cover, such as a flexible sheet of a length sufficient to extend from the rear of the seat back to the rear of the load area. The tonneau cover is preferably retractable, for example, like a horizontal roller-blind. Advantageously, when retracted, the tonneau cover is housed in a cassette mounted on the rear of the seat back. Usually, the distal end of the cover may be provided with means for maintaining the cover in an extended position, for example, means for engaging with complementary engaging means on the vehicle body. In its application in the present invention, complementary engaging means may be provided on the seat assembly or elsewhere to prevent the cover from being retracted when in use to protect the seat in a stowed position.

Alternatively, the cover may comprise a parcel shelf, such as in the form of a substantially rigid hinged panel, also of a length sufficient to extend from the rear of the seat back to the rear of the load area. In this case, it is preferred that the hinge position be located to permit the sheet to be angled substantially to follow the contours of the additional load space created when the seat back is in a stowed position. In this way, when applied to the assembly of the first aspect of the invention for example, part of the shelf may follow the line of the seat back and the remainder can lie over the seat cushion.

Since the vehicle may permit adjacent seats to be in a seating position or be stowed independently of each other, as in split-fold rear seats, it is desirable that each seat assembly in a row of seats has a cover independently mounted thereon.

In order that the invention may be more readily understood, reference will now be made to the following drawings in which:
Figure 1 is a schematic detail side view showing a front and rear vehicle seat arrangement according to a first aspect of the invention in which the seat back of the rear seat is moved from a seating position through to a stowed position; and
Figure 2 is a schematic detail side view of a load cover arrangement according to a second aspect of the invention showing the position of the cover in a seating position and a stowed position of a vehicle rear seat.

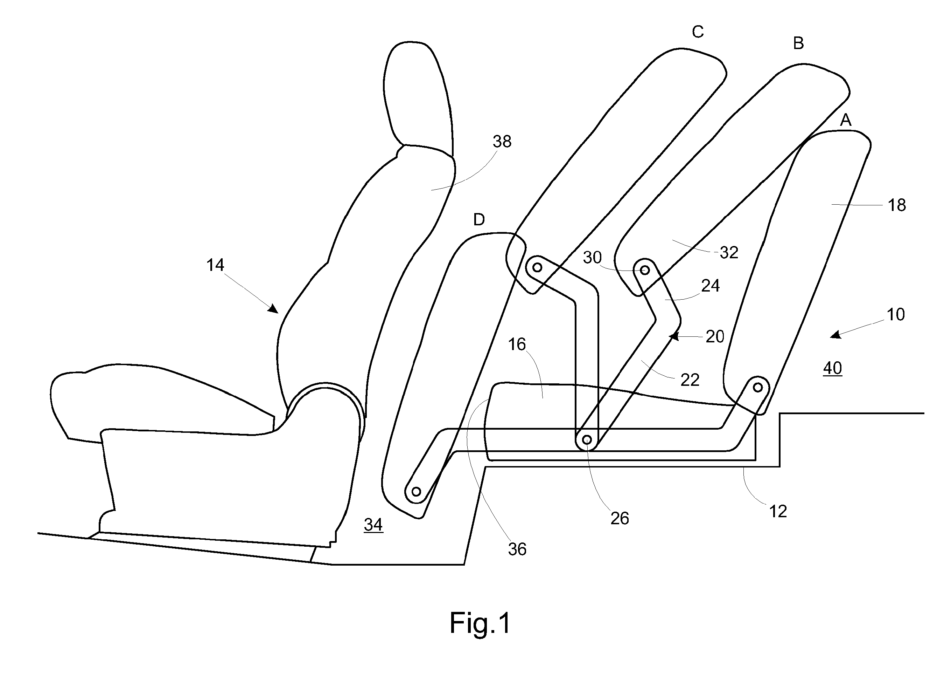

Referring firstly to Figure 1, a vehicle rear seat assembly 10 is mounted on the vehicle floor 12 behind front seat 14. The assembly 10 includes seat cushion 16 and seat back 18. Pivot arm 20 having a first elongate portion 22 and a second angled portion 24 is pivotally connected at pivot position 26 to the side edge 28 of seat cushion 16 and at pivot position 30 to the side edge 32 of seat back 18.

By virtue of its connection to pivot arm 20, seat back 18 is able to be lifted from a seating position A, through intermediate positions B and C, and lowered to a fully stowed position D whereupon the seat back 18 remains substantially upright with its lower end occupying space in the foot well 34 between the front and rear seats 10, 14. In intermediate positions C and D, the seat back 18 is able to pivot freely about pivot position 30 whereas in stowed position D the seat back 18 is prevented from pivoting backwards by virtue of the front edge 36 of the seat cushion 16. As will be apparent from Figure 1 the rotation of the pivot arm 20 results in the translation of the seat back 18 so that, in its fully stowed position D, the seat back remains substantially upright i.e. with its upper end remaining uppermost.

If there is insufficient gap between the front and rear seats 10, 14, it will not be possible for the seat back 18 to be lowered into the foot well 34 and, in which case, the seat back 18 will simply come to rest against the rear face of the seat back 38 of front seat 10.

In either case, the load space 40 behind the rear seat 14 expands to include the space 42 above the seat cushion 16 when the seat back 18 is moved towards a stowed position D.

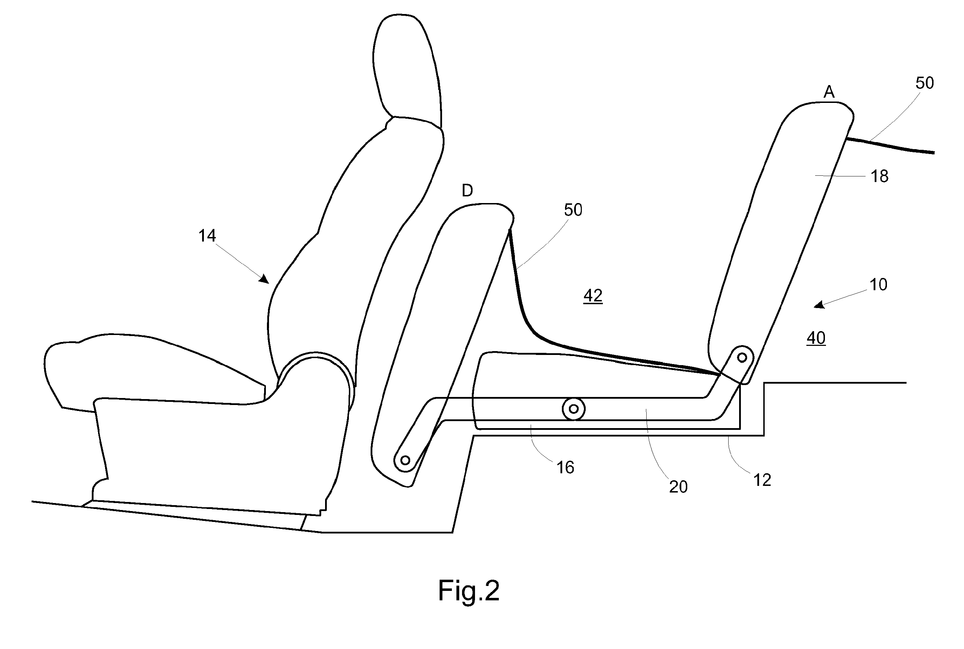

Turning to Figure 2, there is shown a similar vehicle seating arrangement to that of Figure 1 and the same reference numerals are therefore used to designate corresponding features. For clarity, only seating position A and fully stowed position D are illustrated.

In the embodiment of Figure 2, a flexible tonneau cover 50 is mounted on the rear of seat back 18 close to the upper edge thereof.

In seating position A, the tonneau cover 50 extends rearwards over load space 40 behind the rear seat 10 enabling any goods stored in the load space to be substantially hidden from view to an observer outside the vehicle. In moving the seat back 18 to stowed position D, which may involve releasing engagement means (not shown) for holding the cover 50 in its extended position, the cover 50 is able to flex so that it droops from its mounting position and lies against the upper surface of seat cushion 16. In this way, the cover 50 acts as a barrier between the fabric of the seat 10 and any loads that are placed into the load space 42 created.

Many variations are possible within the inventive concepts of the present invention and the foregoing specific description should not be regarded as determining the scope of the invention. For example, the present invention has been particularly described with reference to a vehicle rear seat assembly in which the seat cushion is fixed to the vehicle floor, but it is not limited to such an arrangement. Accordingly, reference should be made to the appended claims and other statements of a general nature as indicating the scope of the invention.

## Claims

1. A vehicle seat assembly (10) comprising a seat cushion (16) and a seat back (18), wherein the seat back (18) is pivotally mounted in the vehicle to permit the seat back (18) to be lifted over the seat cushion (16) from a first seating position (A) to a second stowed position (D) in which the seat back (18) remains substantially upright.

2. An assembly (10) according to claim 1, wherein the vehicle seat assembly (10) comprises a rear seat and the pivotal mounting permits the seat back (18) to be lifted over the seat cushion (16) until it rests in a substantially upright position against the rear of a front seat (14) in an intermediate stowed position.

3. An assembly (10) according to claim 1 or claim 2, wherein the pivotal mounting comprises a pivot arm (20) pivotally connected at a first position (26) to the seat cushion (16) and to which the seat back (18) is pivotally connected at a second position (30).

4. An assembly according to claim 3, wherein the pivot arm (20) is pivotally connected at the first position (26) at or adjacent to the side edge (28) of the seat cushion (16) at a distance midway between the seating position (A) and the fully stowed position (D) of the seat back (18) and at the second position (30) to a side edge (32) of the seat back (18).

5. An assembly (10) according to claim 4, wherein the pivot arm (20) comprises an elongate portion (22) for extending alongside the side edge (28) of the seat cushion (16) from a position adjacent the first pivotal connection (26) to a position adjacent the rear end of the seat cushion (16), and an angled portion (24) for extending generally upwards from the end position to a position adjacent the second pivotal connection (30).

6. An assembly (10) according to claim 5, wherein the elongate portion (22) of the angled pivot arm (20) lies substantially horizontal when the seat back (18) is in both the seating position (A) and a fully stowed position (D).

7. An assembly (10) according to claim 6, further comprising means for preventing rotation of the pivot arm (20) beyond the horizontal position.

8. An assembly (10) according to any one of claims 3 to 7, wherein the pivotal connection between the seat back (18) and the pivot arm (20) at the second position (30) comprises a recline mechanism further to allow the seat back (18) to be reclined to a desired angle in a seating position (A) and/or to be folded forward towards the seat cushion (16).

9. An assembly (10) according to any of the preceding claims, further comprising a load space cover (50) mounted on the rear of the seat back (18) for hiding a load space (40) behind the seat back when the seat back (18) is in a seating position (A) and for providing a barrier between the seat back (18) and/or seat cushion (16) and an extension (42) of the load space (40) created when the seat back (18) is in a stowed position (D).

10. An assembly (10) according to claim 9, wherein the cover (50) is a flexible tonneau cover.

11. An assembly (10) according to claim 10, wherein the cover (50) is retractable and housed in a cassette mounted on the seat back (18).

12. A vehicle comprising an assembly (10) according to any of the preceding claims.
